# FASCICULE DE BREVET EUROPEEN

(11) **EP 1 483 968 B1**
(45) Date de publication et mention de la délivrance du brevet: **28.07.2010**
(21) Numéro de dépôt: 03012746.8
(22) Date de dépôt: 04.06.2003
(51) Int. Cl.: A21D 6/00, A21D 10/04, A21D 2/18

(54) **Préparation de pâte liquide**
Herstellung von Flüssigteig
Preparation of batter

(43) Date de publication de la demande: 08.12.2004
(73) Titulaire: Nestec S.A., 1800 Vevey (CH)
(72) Inventeur: Bloechlinger, Kurt, 8310 Kemptthal (CH); Ekberg, Anders, 8604 Volketswil (CH); Hartmann, Rudolf, 8488 Turbenthal (CH)

(56) Documents cités:
- EP-A- 0 275 878
- EP-A- 0 916 263
- EP-A- 1 249 170
- WO-A-00/69282
- WO-A-91/00016
- FR-A- 2 405 651
- US-A- 4 803 084
- US-B1- 6 217 929
- US-B1- 6 391 366

## Description

La présente invention concerne le domaine des pâtes liquides, conservables plusieurs semaines sous réfrigération, prêtes à cuire et destinées à la réalisation de produits de boulangerie ou viennoiserie salés du type pains farcis, snacks ou cakes salés, par exemple.

Les gâteaux, petits pains, cakes, muffins, madeleines et autre produits similaires sont en général préparés à partir de mélange d'ingrédients pulvérulents auquel sont ajoutés des liquides tels que lait, eau ou oeuf, ceci afin d'obtenir une pâte fluide qui est ensuite versée dans des moules pour cuisson.

La conception de petits pains farcis, cakes salés ou autres produits de boulangerie salés passe par la réalisation d'une pâte plus ou moins fluide consistant en un mélange de farine, matière grasse, sel, agent de levage, liquides et éventuellement d'oeufs. Des ingrédients tels que viande, fromage, jambon ou légumes en morceaux ou tout autre type d'ingrédients sapides et/ou aromatiques peuvent être rajoutés à la pâte. La préparation est ensuite coulée dans des moules et l'ensemble est cuit au four de manière traditionnelle.
La pâte liquide obtenue servant à la réalisation de tels produits ne se conserve habituellement que pendant une durée limitée au réfrigérateur. En effet, de par sa composition, une telle pâte est particulièrement sensible au développement bactérien et sa conservation est limitée à un ou deux jours. De plus, bien qu'une telle façon de faire permette d'obtenir des produits cuits de très bonne qualité, la préparation d'une telle pâte au moment de la réalisation des ces articles est parfois ressentie comme une contrainte voire un obstacle par le consommateur car il est nécessaire d'avoir tous les ingrédients disponibles, de les mélanger en quantité adéquate en évitant de plus la formation de grumeaux, etc, etc. En outre, la réalisation d'une telle pâte prend en général un certain temps de préparation sans compter le temps de repos souvent requis pour ce genre de produit.

US-B1-6391366 décrit une pâte surgelée qu'on peut prendre à la cuillère comprenant 10-40% de farine, 20-30% d'un sirop à haute teneur en maltose, 10-20% d'huile, 1-8% d'un humectant sélectionné parmi: glycérol, sorbitol, xylitol, propylène glycol et leurs mélanges, et une teneur en humidité de 5-20%. Ces ingrédients permettent d'obtenir une Aw inférieure à 0.85.

EP-A-1249170 décrit dans l'exemple 1 une pâte comprenant 30% de farine, 20% d'huile, 20% de sirop de glucose, 15% de concentré de tomates, 10% d'oeufs, 4% d'eau et 1 % d'agent flaveur. L'humidité relative de la pâte est de 30% environ et son Aw de 0.85. La viscosité de la pâte est 6000 mPA.s à 25°C.

US-B1-6217929 décrit une pâte pouvant être prise à la cuillère à température de réfrigération, d'Aw 0.85 et pouvant être conservée pendant 12 semaines à 7°C comprenant: 20-50% de farine, 10-30% d'eau, 20-40% de sucres totaux,5-20% de graisse. Le sucre est choisi dans un groupe consistant en sucrose, sirop à haute valeur en fructose, maltose, sorbitol, maltodextrine, lactose et leurs mélanges.

EP-A-0916263 décrit une pâte à biscuit de goût salé, fluide à température ambiante, d'Aw 0.72-0.93, comprenant 15-30% de farine, 5-15% d'un agent gonflant non sucré (ex: la maltodextrine, DE 6 ou DE 30), 3-20% de graisse, 0.5-1% de sel, 20-30% d'eau ou de lait.

WO-A-0069282 divulgue dans l'exemple 12 une pâte fluide à température ambiante comprenant 21.26% de farine, 0.53% de sel, 6.63% de graisse, 2.04% d'émulsifiant, 5.80% de polydextrose, 11.60% de maltodextrine, 5.80% de sorbitol, 25.4% d'eau.

Il existe aussi sur le marchés des pre-mix déshydratés utilisables pour la réalisation de pâtes par simple ajout d'une quantité déterminée de liquide suivi d'un mélange. Ces produits se conservent en général sans problème, cependant ils ne permettent pas de s'affranchir de l'étape de mélange et de repos qui comme expliqué plus haut est souvent perçue par le consommateur comme un obstacle.

Des produits de pâtes à gâteaux prêts à cuire, réfrigérés ou stables à température ambiante, ont été décrits. Il s'agit principalement de produits dont la conservation est assurée par l'utilisation de conservateurs chimiques. Pour certains autres produits, la stabilité lors de la conservation est assurée par réduction drastique de l'activité de l'eau (Aw) du produit à des valeurs de l'ordre de 0.9 et en dessous. La nature sucrée de tels produits et des produits de pâtisserie pour la fabrication desquels ils sont destinés permet facilement de réguler cette Aw par ajout de quantités importantes de sucre jouant à la fois le rôle d'ingrédient gustatif, d'agent de charge et d'agent réducteur de l'Aw.
Cependant, plus grande est la quantité de sucre nécessaire à la réduction de l'Aw, plus épaisse et visqueuse est la pâte obtenue et par conséquent plus difficile est-elle à verser.
En outre si l'utilisation de sucre de type saccharose, glucose ou sucre inverti dans le but de réduire l'Aw d'un mélange pour gâteaux et autre produits pâtissiers est possible voire même souhaitable sur le plan organoleptique, il n'en va pas de même en ce qui concerne la préparation de pâtes liquides pour fabrication de produits salés ou de produits destinés à accompagner des mets salés. En effet, il n'est pas concevable d'utiliser une pâte à gâteaux contenant 20 à 30% de saccharose pour la préparation d'un cake aux olives et lardons ou pour la préparation de petits pains au fromage et jambon.

En effet, au plan gustatif, la seule quantité de sucre admissible pour des pâtes liquides destinés à la réalisation de ce type de produits finis au goût dominant salé ne peut être que de l'ordre de 2 à 3 % au maximum. Une telle teneur en sucre ne permet cependant pas d'obtenir une Aw satisfaisante pour la conservation réfrigérée du produit sur une période allant jusqu'à plusieurs jours et encore moins plusieurs semaines. Enfin, l'utilisation du seul sel de cuisine (NaCl) pour réduire l'Aw au niveau requis nécessiterait d'inclure une telle quantité de sel dans la pâte que le produit serait tout simplement non consommable car excessivement salé.

Il existe ainsi un besoin d'une pâte liquide résolvant ces problèmes et la présente invention a justement pour but de fournir une pâte liquide ou fluide pouvant se conserver plusieurs semaines au réfrigérateur présentant une saveur neutre non substantiellement sucrée, voire légèrement salée, et qui peut servir de base pour la réalisation de cakes, pains et petit pains salés avec ou sans adjonction d'ingrédients sapides salés tels que jambon, lardon, fromage, olives ou encore oignons par exemple.

A cet effet, la présente invention concerne une pâte fluide, pouvant être conservée plusieurs semaines sous réfrigération comprenant environ 10 à environ 40% de farine, d'environ 10 à 30% d'eau, environ 20 à 30% de matière grasse, jusqu'aux environs 2% de sel et une quantité d'un mélange d'au moins un hydrate de carbone à pouvoir sucrant faible ou substantiellement nul, suffisante pour réduire l'Aw de ladite pâte à une valeur comprise entre 0.85 et 0.90, dans laquelle le ou les hydrates de carbone présentent un pouvoir sucrant faible ou substantiellement nul qui est inférieur à 0.5, de préférence inférieur à 0.3 et de préférence encore inférieur à 0.2 et
dans laquelle la viscosité est comprise entre 5 et 500 Pa.s pour des vitesses de cisaillement comprises entre 0.1 et 100 s⁻¹, et ceci à une température de 8°C..

La pâte selon l'invention est en effet suffisamment liquide ou fluide pour pouvoir être versée directement dans un moule ou préalablement additionnée d'ingrédients et d'annexes solides et aromatisants tels que cubes de jambon, morceaux d'olives, d'oignons ou lardons par exemple.

Malgré sa fluidité, la pâte selon l'invention présente une Aw inférieure à 0.90, préférentiellement inférieure à 0.89 et plus préférentiellement inférieure à 0.88. Une telle valeur de Aw permet une conservation de la pâte liquide selon l'invention à l'état réfrigéré pendant une durée pouvant aller jusqu'à 4 ou 6 semaines et ceci sans constater de dégradation de ses qualités organoleptiques ni de croissance bactérienne néfaste. En effet, après 4 semaines de stockage à l'état réfrigéré, la pâte selon l'invention n'est pas du tout avariée, en particulier le comptage de la Flore Mésophile Aérobie Totale se situe dans une gamme inférieure à environ 100 000 UFC / g, de préférence inférieure à 10 000 UFC/g. En outre, les qualités organoleptiques des produits obtenus après cuisson de ladite pâte sont remarquables. En effet, à n'importe quel stade du stockage, la pâte selon l'invention permet d'obtenir des produits du type cakes ou petits pains de très haute qualité, en particulier d'un goût et d'une texture particulièrement agréables. Il suffit en effet, d'ouvrir l'emballage contenant la pâte selon l'invention et de la verser dans un moule multi-portions ou dans des moules individuels et de procéder à une cuisson traditionnelle dans un four à convection classique pour obtenir lesdits produits. La cuisson peut être menée à une température de l'ordre de 170 à 220°C, préférentiellement de 180° à 200°C et pendant un temps allant de 15 à 45 minutes, dépendant de la taille des moules. La cuisson peut aussi être réalisée dans un four micro-ondes à une puissance de l'ordre de 750 à 1000 W pendant quelques minutes, ceci aussi étant fonction de la taille des moules et du volume de pâte. Enfin, il est aussi envisageable de réaliser la cuisson de ladite pâte selon l'invention dans une poêle d'une manière similaire à une crêpe ou galette.

Par stockage sous réfrigération, on entend par-là, dans le cadre de la présente demande, un stockage à une température inférieure à environ 8°C à 10°C, préférentiellement inférieure à environ 5 à 8°C et en tout état de cause supérieure au point de congélation du produit, c'est à dire environ -2 à 0°C.

La pâte selon l'invention est liquide ou fluide y compris aux températures de réfrigération telles que mentionnées plus haut. Ceci a pour conséquence que dès la sortie du réfrigérateur, la pâte peut être directement utilisée et versée dans des moules.

Dans le cadre de la présente demande, on entend par "pâte liquide" une pâte dont la viscosité s'établit comme suit:

| **Vitesses de cisaillement (1/s)** | **Viscosité (Pa.s)** |
|---|---|
| 0.1 | 50-500 |
| 1 | 30-200 |
| 10 | 10-100 |
| 100 | 5 à 50 |

Les mesures sont effectuées à l'aide d'un rhéomètre Physica UDS 200 équipé d'une géométrie Couette, en mode contrainte imposée, à la température d'environ 8°C. Afin d'obtenir une masse homogène, la pâte est mélangée à l'aide d'une cuillère avant de la verser dans la cuve. Les échantillons sont soumis à 1 min de pré-cisaillement à 10 s⁻¹ et sont ensuite maintenus au repos pendant 3 min. Une rampe de contrainte logarithmique variant de 0.1 Pa à 2000 Pa est ensuite imposée aux échantillons afin de déterminer leur courbe d'écoulement.

En outre, dans le cadre de la présente demande, on entend par le terme "pâte", une composition telle définie à la revendication 1, c'est à dire principalement à base de farine et d'eau et servant à la réalisation de produits de boulangerie par cuisson au four principalement. Selon la composition de la pâte selon la présente invention, on pourra obtenir un produit dont la viscosité s'établit entre une pâte à crêpe épaisse et un pâton à beignet. En tout état de cause, de quelque appellation que l'on qualifie la pâte selon l'invention elle permet d'obtenir des produits cuits en tout point similaires à des produits obtenus avec des préparations présentant de plus grandes quantités d'eau libre.

Dans la suite de la description, les pourcentages sont donnés en poids par rapport au poids total de la composition, sauf indication contraire.

La farine contenue dans la pâte selon l'invention contribue à conférer structure et texture à la pâte et au produit cuit. Une variété de farines peut être utilisée, donnant une variété de textures, goûts ou apparences au produit final après cuisson. Les farines particulièrement utilisables peuvent être choisies dans le groupe comprenant la farine de blé dur ou tendre, la farine de maïs, la farine plus ou moins complète ou la farine plus ou moins riche en amylose, seule ou en combinaison. La farine de blé est plus particulièrement préférée en particulier la farine pâtissière ayant une teneur en protéines inférieure à environ 11%, de préférence comprise entre 8 et 12% environ. Les proportions des différentes farines peuvent varier selon le produit désiré. Les pâtes selon la présente invention contiennent environ de 10 à 40% de farine, de préférence de 20 à 30 % et plus préférentiellement encore de 25 à 30%.

La pâte selon la présente invention peut en outre comprendre une source additionnelle d'amidon tel que des amidons natifs ou modifiés, chimiquement ou physiquement. Des amidons utilisables peuvent être des amidons de pomme de terre, de blé, de riz, de maïs, par exemple, utilisés seuls ou en mélange.

La pâte selon la présente invention comprend environ 20 à 30 % de matière grasse. Cette matière grasse est de préférence une matière grasse liquide à température ambiante, ceci pour faciliter la fluidité de la présente pâte. En particulier, les huiles végétales alimentaires telle qu'huile de tournesol, colza, arachide ou maïs sont utilisables, seules ou en mélange. Les huiles peuvent être complémentées en graisses ou végétales mais dans la limite d'obtention d'une pâte conservant sa fluidité.

La pâte selon la présente invention peut comprendre un agent de levage chimique tel qu'une poudre à lever traditionnelle composée de sodium diphosphate et de sodium hydrogenocarbonate. La quantité d'agent de levage peut aller jusqu'à environ 4%. La présence d'agent de levage n'est pas indispensable à la bonne conservation ni à la bonne fluidité du produit, cela permet d'avoir un produit cuit final aéré et plus léger. Cependant, une pâte liquide selon l'invention sans agent de levage pourra convenir pour la réalisation de crêpes ou galettes par exemple.

La pâte selon l'invention peut en outre comprendre des émulsifiants tels que des phospholipides, mono/diglycérides et autres esters d'acides gras et de polyols et/ou d'acides organiques dans une quantité pouvant aller jusqu'environ 2%, ainsi que des conservateurs tels que l'acide benzoïque et ses dérivés ou autres agents conservateurs à base de sorbate par exemple, dans une quantité pouvant aller jusqu'environ 2%.

La pâte selon la présente invention comprend une source d'eau. L'eau peut ainsi être apportée via de l'eau du robinet, du lait, ou d'un mélange des deux par exemple. Alternativement, le lait peut n'être apporté que sous forme de poudre. La quantité d'eau de la pâte selon l'invention s'établit dans une fourchette d'environ 10 à environ 30%.

La pâte selon l'invention peut aussi comprendre une source d'ovoproduit qui peut être soit des oeufs entiers, soit du jaune liquide soit un mélange de jaune et de blanc d'oeufs pasteurisés tels que disponible dans le commerce. Préférentiellement, on préférera pour des raisons de praticité des produits pulvérulents et la quantité d'ovoproduit sous forme de poudre pourra être jusqu'à environ 1%, préférentiellement jusqu'environ 0.5% de poudre d'oeuf entier et jusqu'à environ 5%, préférentiellement jusqu'à environ 3% de poudre de blanc d'oeuf.

La pâte selon l'invention comprend un mélange d'au moins un hydrate de carbone peu sucrant ou substantiellement non sucrant qui permet de réduire l'activité de l'eau par liaison de l'eau libre et d'assurer ainsi la stabilité du produit tout en apportant le moins de goût sucré conformément à l'application désirée du produit. Il a donc été possible, via la sélection d'au moins hydrate de carbone à pouvoir sucrant faible ou nul de combiner la fonction de liaison de l'eau libre afin de réduire l'Aw, la fonction d'ingrédient de charge tout en limitant le goût sucré du produit obtenu. L'abaissement de l'Aw contribue à la stabilité microbienne nécessaire pour conférer la stabilité au produit sur de longues périodes de stockage à l'état réfrigéré.

L'Aw d'un produit alimentaire est définie comme le ratio de la tension de vapeur de l'eau dans un système alimentaire sur la tension de vapeur de l'eau pure à la même température. Les valeurs d'Aw de la pâte selon l'invention sont mesurées à température ambiante grâce à la méthode de la technique du point de rosée sur miroir refroidi à l'aide d'un appareil Décagon Aqualab modèle CX-2, en utilisant la méthode de mesure indiquée par le fabriquant. Cet appareil est équipé de 2 capteurs : capteur de température infra rouge et capteur optique permettant de détecter le moment auquel la condensation apparaît. Sachant que les pâtes selon l'invention sont conservées à des températures de réfrigération, on prévoira un temps d'équilibrage à température ambiante avant de réaliser la mesure.

De manière générale, les pâtes selon la présente invention présentent une Aw comprise entre environ 0.85 et environ 0.90, de préférence entre environ 0.86 et 0.88. Si l'activité de l'eau est trop élevée, alors la stabilité microbienne n'est pas assurée. Si par contre l'Aw est trop basse, la stabilité microbienne est satisfaisante mais d'une part la pâte est trop visqueuse ce qui la rend difficile à verser et d'autre part il se peut que les produits cuits ne présentent pas la texture et le volume requis et soient de plus exagérément secs.

Dans le cadre de la présente invention, par l'expression "hydrate de carbone à pouvoir sucrant faible ou nul", on comprendra les hydrates de carbone dont le pouvoir sucrant, tel que défini par rapport à la valeur 1 du pouvoir sucrant du saccharose, est inférieur à environ 0.5, de préférence inférieur à 0.3 et de préférence encore inférieur à 0.2. Le pouvoir sucrant d'un sucre, ou d'un hydrate de carbone en général, est une valeur comprise entre 0 et 1 définie comme étant représentative de l'intensité de la saveur sucrée dudit hydrate de carbone, en solution dans l'eau à lg/1, et ceci en comparaison avec le saccharose qui dans les mêmes conditions présente pouvoir sucrant défini comme étant égal à 1.
Les hydrates de carbones convenables peuvent être choisis dans le groupe comprenant les polysaccharides comprenant au moins 3 unités saccharidiques, c'est à dire des polysaccharides et leurs produits de dégradation tels que les sirops de glucose à ou des maltodextrines ou des polysaccharides hydrogénés ainsi que leurs produits de dégradation tels que les sirops de glucose hydrogénés.
D'autres polysaccharides peuvent être utilisables en combinaison avec les précités, en particulier les polyols à faible pouvoir sucrant tels que le sorbitol ou le glycérol par exemple. Sorbitol et/ou glycérol peuvent être combinés avec les précités, individuellement ou en mélange, et ceci dans une quantité allant jusqu'à 5%.

En particulier, les maltodextrines se sont avérées être les ingrédients particulièrement adaptés pour le produit selon la présente invention. En effet, elles ne présentent que peu ou pas de goût sucré et permettent, lorsqu'elles sont utilisées en quantité adéquate de réduire l'Aw de manière satisfaisante sans toutefois augmenter la viscosité de la pâte de manière à réduire à néant sa coulabilité. Dans le cadre de la présente invention, les maltodextrines sont des produits de l'hydrolyse de l'amidon en sirop de glucose et présentent un DE (dextrose équivalent) inférieur à environ 30. Le DE (Dextrose Equivalent) est défini comme le pourcentage de solides ayant été convertis en sucres réducteurs.

Les maltodextrines entrant dans la composition de la pâte selon la présente invention peuvent être choisies dans le groupe comprenant les maltodextrines avec un DE compris entre environ 10 et 30, de préférence entre environ 15 et 25 et de préférence encore entre 20 et 25, utilisées seules ou en mélange. De manière préférentielle, une maltodextrine commercialisée par la Société Roquette sous la marque glucidex® dont le DE est compris aux environs de 20 à 23 est particulièrement adaptée à la présente invention.

La pâte selon l'invention comprend donc une quantité d'un mélange d'au moins un hydrate de carbone adéquat pour réduire l'Aw à la valeur désirée, c'est à dire une quantité d'environ 5% à 25%, de préférence 5% à 20%, et encore plus préférentiellement de 5% à 15%. Ces quantités concernent la quantité totale d'hydrates de carbone contenus dans ledit mélange, sachant que plusieurs type d'hydrates de carbones, polysaccharides et/ou produits de dégradation, polysaccharides hydrogénés et/ou produits de dégradation, polyols peuvent être utilisés.

En effet plusieurs type d'hydrates de carbone peuvent être combinés et utilisés en mélange et entrer dans la composition de la pâte selon la présente invention, ceci en gardant à l'esprit que le mélange total d'au moins un hydrate de carbone retenu ne devra présenter qu'un faible pouvoir sucrant, c'est à dire inférieur à 0.5, préférentiellement inférieur à 0.3 et encore plus préférentiellement inférieur à 0.2.

La quantité de mélange d'au moins un hydrate de carbone contenu dans la pâte selon l'invention sera fonction de la combinaison pouvoir sucrant/pouvoir de réduction de l'activité de l'eau tout en préservant une viscosité de la pâte permettant la verser.

Lors de la combinaison de plusieurs hydrates de carbone, on pourra envisager de complémenter les maltodextrines, qui restent la source d'hydrates de carbone préférée, par d'autres type d'hydrates de carbones tels que des sirops de glucose ayant un DE peu élevé (20 à 35) ou intermédiaire (35 à 55) dans une quantité, par rapport au poids de maltodextrines total de l'ordre de 0 à 50%. Cette combinaison de différents hydrates de carbone se conçoit avec la réserve que le pouvoir sucrant du mélange de ces différents hydrates de carbone permette son utilisation dans le cadre de la présente invention, à savoir un pouvoir sucrant dudit mélange inférieur à 0.5, préférentiellement inférieur à 0.3 et encore plus préférentiellement inférieur à 0.2.

Ainsi grâce à la faible Aw du produit selon l'invention, on peut assurer un stockage à l'état réfrigéré pendant plusieurs semaines. Le produit préserve toutes ses caractéristiques et ses qualités organoleptiques initiales identiques à une pâte fraîchement préparée au moment de son utilisation.

Grâce au choix des hydrates de carbone de la pâte selon l'invention, la présente demande permet de fournir une pâte sans goût sucré, ou alors pas substantiellement percevable, qui est donc idéale pour la réalisation de produits typiquement salés comme des cakes ou des petits pains farcis ou comprenant des ingrédients savoureux tels que fromage, jambon, olives, lardons, cubes de jambon, oignons, par exemple. D'autres ingrédients aromatiques tels que des herbes, épices et aromates peuvent aussi être compris dans la pâte selon l'invention ; il peut s'agir par exemple de basilic, de persil, d'ail, de coriandre, poivre, curry, cumin, thym ou ciboulette.

La caractéristique de haute fluidité de la pâte présente l'avantage que d'une part, lors de son mélange avec les ingrédients de charge cités préalablement, ces derniers peuvent se mêler facilement et sans effort à ladite pâte et que d'autre part il est aisé de transvaser la pâte dans un moule. Les opérations restant à la charge du consommateur sont donc réduites aux minimum, à savoir d'ouvrir l'emballage et de verser la pâte sans aucune adjonction d'ingrédients indispensables ni manipulations fastidieuses. En effet, bien que la pâte se prête particulièrement bien à la préparation de produits contenant divers ingrédients et annexes solides et sapides, elle peut très bien servir pour la réalisation directe de cakes ou pains salés nature pour l'accompagnement d'autres mets salés.
La pâte selon l'invention peut en outre comprendre des arômes et être ainsi mise à la disposition du consommateur final sous une forme aromatisée en adéquation avec les applications culinaires envisagées. Les arômes envisageables que la pâte selon la présente invention peut contenir peuvent être les suivants : olive, fromage, lardons, tomate, par exemple. Enfin, les ingrédients que le consommateur peut rajouter à la pâte juste avant son utilisation peuvent être contenus dans ladite pâte et le consommateur n'a plus qu'à verser le contenu de l'emballage dans un ou des moules dans aucun mélange préalable.
On constate qu'ainsi, grâce à la pâte selon la présente invention, de nombreux besoins et attentes ont pu être satisfaits dans le domaine des produits culinaires réfrigérés destinés à la réalisation directe de produits de "snacking" ou d'autres produits de boulangerie non-patissiers, c'est à dire salés.

La présente invention concerne aussi un procédé de fabrication d'une composition de pâte fluide, pouvant être conservée à des températures de réfrigération, ledit procédé comprenant les étapes de mélanger 10 à 40% de farine, 10 à 30% d'eau, 20 à 30 % de matière grasse, jusqu'à 2% de sel et d'ajouter une quantité d'un mélange d'au moins un hydrate de carbone à pouvoir sucrant faible ou substantiellement nul, suffisante pour réduire l'Aw de ladite pâte à une valeur comprise entre 0.85 et 0.90.

Le procédé de fabrication de la pâte selon la présente invention met en oeuvre des équipements traditionnels utilisés dans le domaine de l'industrie alimentaire. Il est en outre notable que grâce à la formulation de la présente pâte, aucune étape de traitement thermique n'est requise afin d'assurer la stabilité du produit fini. De manière générale, dans le procédé selon la présente invention, les ingrédients pulvérulents sont préalablement mélangés à vitesse peu élevée dans un baril tournant de type Rönrad mixing barrel par exemple afin d'obtenir un ensemble homogène. Cette étape de pré-mix favorise plus particulièrement la distribution homogène de la poudre levante éventuellement présente. Les liquides sont versés dans le mélangeur principal et les ingrédients pulvérulents sont ensuite ajoutés. Les mélangeurs, utilisés individuellement ou combinés, contenant les agrégats de mélange suivants sont particulièrement adaptés à ce type d'application : mélangeur-racleur, homogénéisateur, turbo-homogénéisateur, disperseur ou mélangeur de type Hobart, Fryma, Stephan, ou Moltomat par exemple. Le mélange a lieu à température ambiante, les temps et vitesse de mélange étant définis afin d'obtenir une pâte homogène, sans grumeaux. Le temps de mélange est de l'ordre de quelques minutes. La pâte est ensuite transférée dans une cuve intermédiaire, puis dosée dans des emballages individuels de type Doypac ® à l'aide d'une pompe à pistons. Ces emballages sont du type poche souple en matière plastique. Comme matériau d'emballage adéquat, on peut prendre une matériau multi-couche tel que PET 12-Met.PET 12-PE 120, par exemple. Il va de soit que n'importe quel autre type d'emballage peut faire l'affaire tel que boite ou bol en matière plastique non souple par exemple. Le produit final est emballé sous atmosphère modifiée comprenant CO₂, N₂, ou une combinaison C02/N2. Le ou les gaz sont injectés dans l'emballage qui est ensuite scellé thermiquement grâce à équipement de dosage et de scellement type Thimmonier. Les emballages peuvent être refroidis lors d'un passage dans un tunnel réfrigérant. L'étape de refroidissement du produit peut également avoir lieu avant l'étape d'emballage. Les emballages scellés sont enfin réfrigérés, de préférence à une température inférieure à 5°C. Le produits réfrigérés obtenus peuvent être conservés pendant plusieurs semaines, environ 4 à 5 semaines, sans altération de leurs qualités organoleptiques ou microbiologiques.

## Revendications

1. Pâte fluide, pouvant être conservée plusieurs semaines sous réfrigération comprenant, en pourcentage en poids, 10 à 40% de farine, 10 à 30% d'eau, de 20 à 30% de matière grasse, jusqu'à 2% de sel et une quantité de 5% à 25%, de préférence 5% à 20%, et encore plus préférentiellement de 5% à 15% d'au moins un hydrate de carbone à pouvoir sucrant faible ou substantiellement nul, pour réduire l'Aw de ladite pâte à une valeur comprise entre 0,85 et 0,90,
dans laquelle le ou les hydrates de carbone présentent un pouvoir sucrant faible ou substantiellement nul qui est inférieur à 0.5, de préférence inférieur à 0.3 et de préférence encore inférieur à 0.2 et
dans laquelle la viscosité est comprise entre 5 et 500 Pa.s pour des vitesses de cisaillement comprises entre 0.1 et 100 s⁻¹, et ceci à une température de 8°C.

2. Pâte selon la revendication 1, **caractérisée en ce que** la matière grasse est une matière grasse liquide à température ambiante.

3. Pâte selon la revendication 1, **caractérisée en ce que** le mélange d'au moins un hydrate de carbone à pouvoir sucrant faible ou substantiellement nul est choisi dans un groupe comprenant des polysaccharides comprenant au moins 3 unités saccharidiques et leurs produits de dégradation, des sirops de glucose, des maltodextrines, des polysaccharides hydrogénés et leurs produits de dégradation, des polyols, utilisés seuls ou en mélange.

4. Pâte selon la revendication 1, **caractérisée en ce que** le mélange d'au moins un hydrate de carbone à pouvoir sucrant faible ou substantiellement nul est choisi dans un groupe comprenant des polysaccharides dont le DE est compris entre 10 et 30, de préférence entre 15 et 25 et de préférence encore entre 20 et 25.

5. Pâte selon la revendication 1, **caractérisée en ce que** le mélange d'au moins un hydrate de carbone à pouvoir sucrant faible ou substantiellement nul est choisi dans un groupe comprenant les maltodextrines.

6. Pâte selon la revendication 5, **caractérisée en ce que** les maltodextrines sont complémentées par des sirops de glucose choisi dans le groupe comprenant les sirops de glucose ayant un DE compris entre 20 et 35, entre 35 et 55 et ceci jusqu'à 50% de la quantité de maltodextrines.

7. Pâte selon la revendication 5, **caractérisée en ce qu'**elle comprend du glycérol et/ou du sorbitol.

8. Procédé de fabrication d'une composition de pâte fluide, pouvant être conservée à des températures de réfrigération selon l'une quelconque des revendications 1 à 7, ledit procédé comprenant les étapes de mélanger 10 à 40% de farine, de 20 à 30% de matière grasse, de 10 à 30% d'eau, jusqu'à 2% de sel et d'ajouter au moins un hydrate de carbone à pouvoir sucrant faible ou substantiellement nul en quantité suffisante pour réduire l'Aw de ladite pâte à une valeur comprise entre 0,85 et 0,90.

## Claims

1. Fluid dough capable of being kept several weeks under refrigeration comprising in weight percent, 10 to 40% flour, 10 to 30% water, 20 to 30% fat, up to 2% salt and an amount of 5% to 25%, preferably 5% to 20%, even more preferably 5% to 15% of at least one carbohydrate with weak or substantially no sweetening power, in order to reduce the Aw of said dough to a value comprised between 0.85 and 0.90, in which the carbohydrate or carbohydrates present a weak or substantially no sweetening power which is less than 0.5, preferably less than 0.3, more preferably less than 0.2 and in which the viscosity is comprised between 5 and 500 Pa.s for shearing rates comprised between 0.1 and 100s⁻¹ at a temperature of 8°C.

2. Dough according to claim 1, **characterised in that** the fat is a liquid fat at ambient temperature.

3. Dough according to claim 1, **characterised in that** the mixture of at least one carbohydrate with weak or substantially no sweetening power is chosen from a group comprising polysaccharides comprising at least 3 saccharide units and their degradation products, glucose syrups, maltodextrins, hydrogenated polysaccharides and their degradation products, polyols, used alone or in a mixture.

4. Dough according to claim 1, **characterised in that** the mixture of at least one carbohydrate with weak or substantially no sweetening power is chosen from a group comprising polysaccharides having a DE comprised between 10 and 30, preferably between 15 and 25 and more preferably between 20 and 25.

5. Dough according to claim 1, **characterised in that** the mixture of at least one carbohydrate with weak or substantially no sweetening power is chosen from a group comprising maltodextrins.

6. Dough according to claim 5, **characterised in that** the maltodextrins are complemented with glucose syrups chosen in the group comprising glucose syrups having a DE comprised between 20 and 35, between 35 and 55 and up to 50% of the quantity of maltodextrins.

7. Dough according to claim 5, **characterised in that** it comprises glycerol and/or sorbitol.

8. Process for the manufacture of a fluid dough composition capable of being stored at refrigeration temperatures according to any of claims 1 to 7, said process comprising the steps of mixing 10 to 40% flour, 20 to 30% fat, 10 to 30% water, up to 2% salt and adding at least one carbohydrate with weak or substantially no sweetening power in an amount sufficient to reduce the Aw of said dough to a value comprised between 0.85 and 0.90.

## Patentansprüche

1. Flüssigteig, der mehrere Wochen gekühlt aufbewahrbar ist, und in Gewichtsprozenten aufweist:
10-40 % Mehl,
10-30% Wasser,
20-30 % Fett,
bis zu 2 % Salz, und
5-25 %, vorzugsweise 5-20 %, noch mehr bevorzugt 5-15 % wenigstens eines Kohlenhydrats, dessen Süßkraft gering oder im Wesentlichen null ist, um die Wasseraktivität a_{W} des Teigs auf einen Wert zwischen 0,85 und 0,90 zu verringern, wobei das Kohlenhydrat bzw. die Kohlenhydrate eine schwache oder im Wesentlichen nicht bestehende Süßkraft aufweisen, die weniger als 0,5, vorzugsweise weniger als 0,3 und noch mehr bevorzugt weniger als 0,2 beträgt, und
wobei die Viskosität bei einer Temperatur von 8°C zwischen 5 und 500 Pa-s. bei einer Scherfrequenz zwischen 0,1 und 100 1/s beträgt.

2. Teig nach Anspruch 1,
**dadurch gekennzeichnet,**
**dass** das Fett ein bei Umgebungstemperatur flüssiges Fett ist.

3. Teig nach Anspruch 1,
**dadurch gekennzeichnet,**
**dass** eine Mischung wenigstens eines Kohlenhydrats mit schwacher und im Wesentlichen nicht bestehender Süßkraft ausgewählt ist aus der Gruppe, die aufweist Polysaccharide mit wenigstens drei Saccharideinheiten und ihre Abbauprodukte, Glukosesirups, Maltodextrine, hydrierte Polysaccharide und ihre Abbauprodukte, Polyole, jeweils einzeln oder in Mischung verwendet.

4. Teig nach Anspruch 1,
**dadurch gekennzeichnet, dass** die Mischung wenigstens eines Kohlenhydrats mit schwacher und im Wesentlichen nicht bestehender Süßkraft nicht ausgewählt ist aus der Gruppe, die aufweist Polysaccharide, deren DE-Wert zwischen 10 und 30, vorzugsweise zwischen 15 und 25 und noch mehr bevorzugt zwischen 20 und 25 liegt.

5. Teig nach Anspruch 1,
**dadurch gekennzeichnet,**
**dass** die Mischung des wenigstens einen Kohlenhydrats mit schwacher oder im Wesentlichen nicht bestehender Süßkraft ausgewählt ist aus der Gruppe der Maltodextrine.

6. Teig nach Anspruch 5,
**dadurch gekennzeichnet,**
**dass** die Malotdextrine ergänzt sind durch Glukosesirups, die ausgewählt sind aus der Gruppe der die Glukossirupe mit einem DE-Wert zwischen 20 und 25, zwischen 35 und 55 und mit einem Anteil bis zu 50 % der Maltodextrin-Menge.

7. Teig nach Anspruch5,
**dadurch gekennzeichnet,**
**dass** er Glycerol und / oder Sorbitol aufweist.

8. Herstellungsverfahren für eine Flüssigteigmischung, die bei kühlen Temperaturen aufbewahrt werden kann, mit den Merkmalen der Ansprüche 1 bis 7, wobei das Verfahren die folgenden Schritte aufweist,
Mischen von 10 bis 40 % an Mehl, 20 bis 30 % Fett, 10 bis 30 % Wasser, bis zu 2 % Salz und hinzufügen wenigstens eines Kohlenhydrats mit schwacher oder im Wesentlichen nicht bestehender Süßkraft in einer Menge, die ausreicht, die Wasseraktivität a_{W} auf einen Wert zwischen 0,85 und 0,90 abzusenken.
